# EUROPÄISCHE PATENTANMELDUNG

(11) **EP 0 673 965 A1**
(43) Veröffentlichungstag der Anmeldung: **27.09.1995**
(21) Anmeldenummer: 94104760.7
(22) Anmeldetag: 25.03.1994
(51) Int. Cl.: C08K 3/24, C08L 27/12, H01H 33/78

(54) **Stabilisierter Fluorkunststoff sowie daraus hergestellte Blasdüsen für Druckgasschalter**

(71) Anmelder: GEC ALSTHOM T&D AG, CH-5036 Oberentfelden (CH)
(72) Erfinder: Aeschbach, Heinz, CH-5734 Reinach (CH); Blatter, Johannes, CH-5014 Gretzenbach (CH); Bräuer, Fedor, CH-5606 Dintikon (CH)
(74) Vertreter: Patentanwälte Schaad, Balass & Partner AG

(57) **Zusammenfassung**

Ein Kunststoff ist gegenüber der Einwirkung des Lichtbogens stabilisiert. Die Hauptkomponente des Kunststoffes ist Fluorpolyethylen. Der Stabilisator ist eine Verbindung der Formel Co0·XA10₃, worin X für Al, Cr oder Ti steht. Diese stabilisierte Kunststoffzusammensetzung eignet sich besonders für die Herstellung von Blasdüsen in Druckgasschaltern.

## Beschreibung

Die Erfindung betrifft einen gegenüber der Einwirkung eines elektrischen Lichtbogens stabilisierten Kunststoff gemäss dem Oberbegriff von Anspruch 1, Formkörper aus diesem Kunststoff, insbesondere Blasdüsen für einen Druckgasschalter.

Blasdüsen in Druckgasschaltern werden einer ausserordentlich grossen Beanspruchung ausgesetzt. Der in einer Blasdüse beim Schaltvorgang entstehende Lichtbogen wirkt durch die hohe Temperatur, durch die sichtbare UV- und noch härtere Strahlung auf das Material der Blasdüse und auch auf das Isoliergas z.B. Schwefelhexafluorid (SF₆) ein. Ausser durch den Lichtbogen wird das Material der Blasdüse auch durch die Abbauprodukte des Kunststoffes und des Isoliergases, insbesondere durch freie Radikale angegriffen. Entsprechend hoch sind die Anforderungen an die Blasdüsen der Druckgasschalter.

Die Blasdüsen von Druckgasschaltern werden bereits aus einem hochbeständigen Kunststoff, üblicherweise auf Fluorpolyethylen-Basis, hergestellt. Trotzdem wird eine starke Schädigung des Materials der Blasdüsen nach einigen Ausschaltvorgängen beobachtet. Die beobachtete Schädigung von Blasdüsen umfasst sowohl die mechanische Schädigung des Materials als auch eine Verschlechterung der elektrischen Eigenschaften. Die meistbeobachteten mechanischen Schädigungen sind die Bildung von Hohlräumen oder Poren im Inneren des Kunststoffes, als auch Schuppenbildung an der Kunststoffoberfläche. Durch den sogenannten Abbrand werden die Abmessungen der Blasdüsen verändert. Als Folge der Schädigungen wird eine Verschlechterung der elektrischen Eigenschaften, insbesondere des Ausschaltvermögens, festgestellt.

Um die Stabilität des Kunststoffes für Blasdüsen von Druckgasschaltern zu erhöhen, wurden bereits verschiedene Füllstoffe eingesetzt. Die Anforderungen sind hierbei sehr hoch; die Füllstoffe sollen gegen die Einwirkung des Lichtbogens und der Zersetzungsprodukte des Kunststoffes und des Isoliergases beständig sein, d.h. sowohl gegen Strahlung, als auch Temperatur und chemische Einflüsse innert sein, gleichzeitig sollen die Isolationseigenschaften des Kunststoffes nicht herabgesetzt werden.

Es fehlt nicht an Versuchen zur Erfüllung dieser Anforderungen.

Aus der CH-A 596 641 ist eine Blasdüse für Druckgasschalter aus Kunststoff bekannt, die einen Füllstoff enthält, der frei von Kristallwasser, Si und P ist. Konkret werden Kohle, Titandioxid, Calciumfluorid und Korund vorgeschlagen. Durch diese Zusätze soll die Bildung von Gasen und Dämpfen im Kunststoffmaterial als Folge der Lichtbogeneinwirkung vermieden werden.

In der CH-A 548 655 wird die Zugabe eines anorganischen Fluorids zum Material der Blasdüse in einer Menge von 10 bis 50 Teilen pro 100 Teilen Polytetrafluorethylen vorgeschlagen. Dadurch soll dieser Kunststoff gegenüber den gasförmigen Halogenen, die als Zersetzungsprodukt bei der Einwirkung des Lichtbogens entstehen, stabilisiert werden.

Aus der CH-A 653 477 ist eine Blasdüse aus Kunststoff für einen Druckgasschalter bekannt, der einen Füllstoff aus Metallpulver enthält. Der Anteil dieses Füllstoffes beträgt maximal 30%. Dieser Füllstoff absorbiert die elektromagnetische Strahlung und soll dadurch besser Eindringen in tiefere Schichten des Kunststoffes vermeiden.

Aus der EP-B 0 046 174 ist eine Blasdüse mit Schichtaufbau bekannt, wobei die dem Lichtbogen abgewandte Schicht aus einer Schicht eines druckfesten Kunststoffes hoher elektrischer Festigkeit und die dem Lichtbogen zugewandte Schicht aus einem lichtbogenbeständigen Material besteht. Die letztgenannte Schicht wird durch Einfärben strahlungsundurchlässig gemacht.

Ausser durch die Zugabe von Füllstoffen wurde bereits versucht, durch Modifikation des Kunststoffes die Lichtbogenbeständigkeit zu erhöhen. In der EP-A 0 066 298 wird ein Druckgasschalter mit einer Blasdüse beschrieben, deren Oberfläche aus einem stickstoffhaltigen Polymer und einem Polyolefin gebildet ist. Sofern der Kunststoff einen anorganischen Füllstoff enthält, wird dessen Oberfläche vorzugsweise auch mit einem stickstoffhaltigen Polymer überzogen.

Da alle diese Vorschläge keine ausreichende Stabilisierung des Düsenmaterials für Druckgasschalter geschaffen haben, besteht weiterhin die Aufgabe, die Stabilität von Blasdüsen für Druckgasschalter aus Kunststoff auf Fluorpolyethylenbasis zu verbessern, ohne das Isolationsvermögen des Kunststoffes wesentlich zu verändern. Ein besonderer Verbesserungsbedarf besteht für die Erhöhung der Abbrandfestigkeit.

Diese Aufgabe wird gemäss der Erfindung durch die Merkmale des kennzeichnenden Teils von Anspruch 1 gelöst. Besonders bevorzugte Ausführungsformen der Erfindung bilden den Gegenstand der Ansprüche 2 bis 7.

Es wurde überraschender Weise gefunden, dass Verbindungen der Formel CoO·XAlO₃ die Stabilität von Blasdüsen für Druckgasschalter stark verbessern. Es wurden gute Resultate mit Stabilisatoren von einer Korngrösse von < 300 µm erzielt. Bevorzugt wird eine Korngrösse von 0,5 bis 5 µm. Die besten Resultate wurden mit einer Korngrösse von etwa 1 µm erhalten.

Durch die kleine Korngrösse des Stabilisators wird vermutlich die Bildung von feinkristallinem Kunststoff begünstigt. Dadurch wird eine Homogenität dieses Materials erzielt, die vermutlich eine zusätzliche stabilisierende Wirkung, insbesondere bezüglich der mechanischen Beständigkeit, ergibt.

Der Stabilisator kann gewünschtenfalls in verhältnismässig grossen Mengen von bis zu 20 Gew.-% in den Kunststoff eingearbeitet werden, wobei mit Mengen von 0,3 bis 1 Gew.-%, insbesondere 0,4 bis 0,7 Gew.-%, sehr gute Stabilisierwirkungen erzielt werden.

Bevorzugt werden Stabilisatoren, die eine Spinell-Kristallstruktur besitzen. Von der chemischen Zusammensetzung her werden Stabilisatoren der Formel CoO·Al₂O₃ und CoO·CrAlO₃ bevorzugt. Diese Verbindungen sind bekannt, z.B. unter dem Namen Cobaltblau und Cobaltchromaluminat und im Handel erhältlich.

Die Herstellung des erfindungsgemässen stabilisierten Kunststoffes kann nach bekannten Methoden erfolgen. Das gleiche gilt für die Formgebung der Blasdüsen, bzw. für deren Form. Selbstverständlich kann der erfindungsgemässe Kunststoff auch in anderen Bereichen, in denen eine Stabilität gegen die Einwirkung von Lichtbogen erwünscht ist, eingesetzt werden.

Die Erfindung wird anhand der nachfolgenden Beispiele weiter veranschaulicht.

### Beispiel 1

100 Teile Polytetrafluorethylenpulver (TF 1620 von der Firma Hoechst) werden mit 0,4 Teilen Cobaltblau (CoO·Al₂O₃) vermischt. Das Mischen erfolgt bei einer Temperatur von unterhalb 18°C. Der Mischvorgang wird fortgesetzt bis eine homogene Verteilung des Cobaltblaupigmentes stattgefunden hat.

Das erhaltene Gemisch wird unter Druck zu Blasdüsen geformt und danach unter erhöhter Temperatur gesintert. Die Abkühlung der gesinterten Blasdüse erfolgt in kontrollierter Weise.

### Beispiel 2

Das Verfahren von Beispiel 1 wird in gleicher Weise ausgeführt jedoch erfolgt das Vermischen des Polytetrafluorethylenpulvers mit Cobaltblau bei einer Temperatur von unterhalb 0°C.

### Beispiel 3

Das Verfahren von Beispiel 1 wird ausgeführt, jedoch werden anstelle von Cobaltblau 0,6 Teile Cobaltchromaluminat eingesetzt.

Die hergestellten Blasdüsen für Druckgasschalter weisen nach mehreren Ausschaltvorgängen keine Hohlraum- oder Porenbildung auf. Ausserdem wird ein nur geringer Abbrand beobachtet. Die dielektrischen Eigenschaften der Blasdüsen bleiben annähernd unverändert.

## Patentansprüche

1. Gegenüber der Einwirkung eines elektrischen Lichtbogens stabilisierter Kunststoff im wesentlichen auf Fluorpolyethylenbasis, dadurch gekennzeichnet, dass er als Stabilisator eine Verbindung der Formel CoO·XAlO₃, wobei X für Al, Cr oder Ti steht, enthält.

2. Kunststoff nach Anspruch 1, dadurch gekennzeichnet, dass er im wesentlichen aus Polytetrafluorethylen besteht.

3. Kunststoff nach einem der vorangehenden Ansprüche, dadurch gekennzeichnet, dass der Stabilisator eine Teilchengrösse von kleiner als 300 µm, vorzugsweise 0,5 bis 5 µm, insbesondere von etwa 1 µm, aufweist.

4. Kunststoff nach einem der vorangehenden Ansprüche, dadurch gekennzeichnet, dass er 0,3 bis 20 Gew.-%, vorzugsweise 0,3 bis 1 Gew.-%, insbesondere 0,4 bis 0,7 Gew.-%, des Stabilisators enthält.

5. Kunststoff nach einem der vorangehenden Ansprüche, dadurch gekennzeichnet, dass der Stabilisator eine Spinell-Kristallstruktur besitzt.

6. Kunststoff, dadurch gekennzeichnet, dass er als Stabilisator CoO·Al₂O₃ enthält.

7. Kunststoff nach einem der vorangehenden Ansprüche, dadurch gekennzeichnet, dass er als Stabilisator CoO·CrAlO₃ enthält.

8. Formkörper bestehend aus einem Kunststoff nach einem der vorangehenden Ansprüche.

9. Blasdüse für einen Druckgasschalter, dadurch gekennzeichnet, dass sie aus einem Kunststoff nach einem der Ansprüche 1 bis 7 besteht.

10. Blasdüse für einen Druckgasschalter, dadurch gekennzeichnet, dass sie, mindestens an ihrer Innenfläche, einen Überzug aus einem Kunststoff nach einem der Ansprüche 1 bis 7 aufweist.
